(19) Europäisches Patentamt
European Patent Office
Office européen des brevets

(11) Veröffentlichungsnummer: **0 472 892 A2**

## (12) EUROPÄISCHE PATENTANMELDUNG

(21) Anmeldenummer: **91112097.0**

(22) Anmeldetag: **19.07.91**

(51) Int. Cl.5: **B23K 9/007**

(30) Priorität: **27.07.90 DE 4023814**

(43) Veröffentlichungstag der Anmeldung:
**04.03.92 Patentblatt 92/10**

(84) Benannte Vertragsstaaten:
**AT BE CH DE DK FR GB IT LI NL SE**

(71) Anmelder: **Krupp - VDM AG**
**Plettenberger Strasse 2**
**W-5980 Werdohl(DE)**

(72) Erfinder: **Hoffmann, Theodor**
**Kettelerweg 9**
**W-5990 Altena 8(DE)**
Erfinder: **Leinweber, Karl-Heinz**
**Feldstrasse 16**
**W-5990 Altena 1(DE)**
Erfinder: **Manfrohn, Armando**
**Struthweg 2**
**W-6342 Haiger 6(DE)**

(74) Vertreter: **Cohausz & Florack Patentanwälte**
**Postfach 14 01 61 Schumannstrasse 97**
**W-4000 Düsseldorf 1(DE)**

(54) Verfahren zum punktuellen Befestigen eines hochkorrosionsbeständigen Auflagebleches auf einem metallischen Trägerkörper.

(57) Die Erfindung befaßt sich mit dem punktuellen Befestigen eines hochkorrosionsbeständigen Auflagebleches auf einem weniger korrosionsbeständigen Trägerkörper und sieht vor, daß das hochkorrosionsbeständige Auflageblech mit Löchern versehen und durch eine erste Auftragsschweissung in den Löchern gleichzeitig mit dem Trägerkörper aus Stahl verbunden wird. Anschließend wird die erste Schweißlage durch eine zweite Auftragsschweißung abgedeckt. Das Auftragsschweißen erfolgt mit Hilfe des Metall-Inertgas-Schweißens mit Drahtelektrode.

Fig. 3

EP 0 472 892 A2

Die Erfindung betrifft ein Verfahren zum punktuellen Befestigen eines hochkorrosionsbeständigen Auflagebleches geringerer Dicke auf der Oberfläche eines weniger korrosionsbeständigen metallischen Trägerkörpers größerer Wanddicke, wobei das Auflageblech mit mehreren, auf seine Fläche verteilten Löchern versehen, danach auf den Trägerkörper aufgelegt und unter Schutzgas in den Löchern mit dem Trägerkörper unter Zusatz hochkorrosionsbeständigen Schweißzusatzwerkstoffes verschweißt wird, wobei die im Loch freiliegende Oberfläche des Trägerkörpers mit einer Auftragsschweißung versehen wird und dabei am Lochrand das Verschweißen des Auflagebleches mit dem Trägerkörper erfolgt,

Ein solches Verfahren ist durch die US PS 3,213,261 bekannt, wobei dort die Verschweißung eines relativ dicken Auflagebleches mit einem Trägerkörper beschrieben ist. Die Erfindung befaßt sich dagegen mehr mit der Befestigung von sogenannten Hemdauskleidungen in Behälter und Apparateteile der Chemie-Industrie, Umwelttechnik, Offshore- und Meeres-technik, Meerwasser-Entsalzungsanlagen sowie weiterer artähnlichen Anwendungsgebieten.

In den vergangenen Jahren haben die Anforderungen an die Korrosionsbeständigkeit von Anlagen, insbesondere der Chemie-Industrie und der Umwelttechnik sehr zugenommen. Als Folge davon ergibt sich eine zunehmende Verwendung hochkorrosionsbeständiger Werkstoffe, insbesondere solcher auf Nickelbasis, wie beispielsweise von Nickel-Chrom-Molybdän-Legierungen. Bekannte Vertreter dieser Gruppe sind Nicro-fer 5716 hMoW (Deutsche Werkstoff-Hr. 2.4819) und Nicrofer 6616 hMo (Deutsche Werkstoff-Nr. 2.4610). Eine Heuentwicklung ist Nicrofer 5923 hMo (Deutsche Werkstoff-Nr. 2.4605). Diese hochkorrosionsbeständigen Werkstoffe sind aufgrund ihrer hohen Nickel-, Chrom- und Molybdängehalte teuer, sodaß an einer sparsamen Verwendung erhebliches wirtschaftliches Interesse besteht. Eine solche sparsame Verwendung ist beispielsweise dann möglich, wenn sie in Form dünnwandiger Plattierauflagen auf Kohlenstoffstahl zum Einsatz kommen. Ein solches Plattieren erfordert eine feste Verbindung mit dem Trägerwerkstoff aus Kohlenstoffstahl, welche in der Regel durch Explosionsplattieren oder Walzplattieren, in Sonderfällen aber auch durch Auftragsschweißen erreicht wird.

In jüngerer Zeit finden daneben die genannten Hemdauskleidungen, in Englisch auch Tapezieren (wallpapering) genannt, ein zunehmendes Interesse. Hierbei werden dünnwandige Auskleidungen aus Blech oder Band oder Abdeckungen von typischerweise 1,5 bis 2,5 mm Dicke auf die korrosionsgefährdeten Stellen aufgebracht. Dies hat seine besonderen Vorteile u.a. dann, wenn eine nachträgliche Auskleidung oder Abdeckung erforderlich ist, so im Fall von Reparatur- oder Sanierungsmaßnahmen sehr großvolumiger Komponenten, wie sie beispielsweise für die Rauchgasentschwefelung fossil befeuerter Kraftwerke erforderlich sind.

Herkömmlicherweise werden die Hemdauskleidungen durch Verschweißen der Auflagebleche oder -bänder an den Apparate- Innenwandungen befestigt. Die Bleche oder Bänder werden an ihren Kanten durch Kehlnähte mit dem Trägerwerkstoff verbunden. Anschließend müssen die Kehlnähte und die für die Herstellung der Kehlnähte erforderlichen Zwischenräume mit Streifen aus dem korrosionsbeständigen Werkstoff abgedeckt werden. Diese Abdeckstreifen müssen mit dem Auflagewerkstoff wiederum durch Kehlnahtschweißung dicht verbunden werden. Umgekehrt lassen sich anstelle der Abdeckstreifen zunächst Stege aus dem korrosionsbeständigen Werkstoff auf den Trägerwerkstoff aufbringen, auf denen dann die Bleche oder Bänder aus dem korrosions-beständigen Werkstoff wiederum durch Kehlnahtschweißung befestigt werden.

Eine ähnliche Ausführungsform der vorstehend genannten Befestigungsart ist dann gegeben, wenn in die Bleche oder Bänder aus dem korrosionsbeständigen Auflagewerkstoff Löcher eingebracht werden, deren Innenränder mit dem Trägerwerkstoff durch Kehlnahtschweißung verbunden werden. In diesem Fall ist dann ein Abdecken der Löcher durch Deckel aus dem korrosionsbeständigen Werkstoff erforderlich.

Die Befestigungsarten nach dem geschilderten, weiter entfernten Stand der Technik sind sehr kostenaufwendig. Sie sind insofern stets erforderlich, um die aufzubringenden Bleche oder Bänder an ihren Rändern mit dem Trägerkörper zu verbinden. Sie lassen sich aber in ihrem Aufwand erheblich vermindern, wenn die aufzubringenden korrosionsbeständigen Bleche oder Bänder sehr großformatig gewählt werden. Dann wird aber ein punktweises Befestigen in der Fläche gemäß dem gattungsbildenden Stand der Technik in zunehmendem Umfang erforderlich, wobei erfahrungsgemäß 3 bis 5 derartiger punktueller Fixierungen pro $m^2$ vorzusehen sind.

In der Praxis findet man zur Befestigung solcher großformatiger Auflagebleche ein Verfahren, bei dem in die Bleche oder Bänder aus dem korrosionsbeständigen Auflagewerkstoff Löcher eingebracht werden, deren Innenränder mit dem Trägerwerkstoff durch Kehlnahtschweißung verbunden werden. In diesem Fall ist dann ein Abdecken der Löcher durch den Lochbereich vollständig erfassende Deckel aus dem korrosionsbeständigen Werkstoff und damit wiederum eine Kehlnahtschweißung erforderlich. Auch das ist aber wegen des erforderlichen Abdeckens der Einzelfixierungen mit Auflageblechstücken immer noch sehr aufwendig.

Erprobt worden ist ein direktes punktweises Durchschweißen der hochkorrosionsbeständigen Auflagebleche und -bänder ohne ihre vorherige Lochung unter Zuhilfenahme des Metall - Inertgas - Verfahrens (MIG). Ein solches blindes Durchschweißen erlaubt aber keine Beurteilung, wie weit die Schweißung durch die Auflage tatsächlich in den darunter befindlichen Trägerwerkstoff eingedrungen und damit eine ausreichende Befestigung gegeben ist. Für das Durchschweißen ist ein spaltfreies Anliegen der Auflage auf dem Trägerwerkstoff erforderlich, welches in der Praxis einer Baustelle nicht gewährleistet werden kann. Ist andererseits der Trägerwerkstoff aufgeschmolzen und eine Befestigung doch erzielt, so ist die aus dem Trägerwerkstoff kommende Eisenaufmischung des Schweißgutes nicht kontrollierbar. Es ist deshalb in solchen Fällen immer damit zu rechnen, daß das schweißgut in seiner chemischen Analyse nicht den Anforderungen entspricht, sondern einen viel höheren Eisengehalt aufweist, als die Werkstoffnormen für den korrosionsbeständigen Auflagewerkstoff als noch maximal zulässig vorschreiben. Damit ist dann seine Korrosionsbeständigkeit nicht mehr gewährleistet.

Es stellt sich daher die Aufgabe, ein Verfahren zum punktuellen Befestigen von Auflageblechen zu finden, das bei geringem wirtschaftlich und technisch tragbaren Aufwand eine sichere Verbindung mit dem Trägerkörper und die gewünschte Korrosionsbeständigkeit an der Befestigungsstelle bringt.

Erfindungsgemäß wird daher vorgeschlagen, daß die Auftragsschweißung in zwei Abschnitten durchgeführt wird und in der ersten Auftragsschweißung eine erste, die im Loch freiliegende Oberfläche des Trägerkörpers vollständig abdeckende Schweißlage mit geringerer Dicke als die Dicke des Auflagebleches erzeugt und die Verschweißung des Auflagebleches mit dem Trägerkörper vorgenommen wird, worauf nach dem Erstarren der ersten Schweißlage mit einer zweiten Auftragsschweißung die erste Auftragsschweißung abgedeckt wird und daß die Schutzgasatmosphäre der ersten Auftragsschweißung über die Erstarrungsphase der ersten Schweißlage bis zum Ende der zweiten Auftragsschweißung durchgehend aufrechterhalten wird.

Es hat sich herausgestellt, durch die Aufteilung in zwei zeitlich voneinander getrennten Auftragsschweißungen ein vor der Erprobung der Erfindung noch in Erwägung gezogenes Abdeckeln ganz entfallen kann und die Erfindung ein kostengünstiges Verfahren hoher Betriebssicherheit bringt.

Bei der ersten Auftragsschweißung wird eine Schweißlage auf den Werkstoff des Trägerkörpers aufgebracht und dabei fest mit diesem verbunden. Zugleich erfolgt die Verbindung zwischen Auflageblech und Trägerkörper. Diese erste Auftragsschweißung weist in der Regel eine hohe, aus dem Trägerwerkstoff kommende Aufmischung mit Eisen auf. Überraschenderweise setzt sich die Eisenaufmischung bei der zweiten Auftragsschweißung kaum mehr fort und kann für die zweite Schweißlage durch die Wahl geeigneter Schweißparameter so gering gehalten werden, daß die dem Korrosionsangriff ausgesetzte Zweite Schweißlage in ihrer Eisenaufmischung noch innerhalb der Normen für das Schweißgut bleibt. In kritischen Fällen lassen sich aber auch mehr oder weniger deutlich überlegierte Elektrodendrähte einsetzen, um einen Eisenüberhang in der Zweiten Schweißlage ganz abzublocken. Wichtig, doch für den Fachmann verständlich ist, daß die zweite Auftragsschweißung die erste Auftragsschweißung zwar abdeckt, aber nicht unzulässig über den Durchmesser des Loches hinaus ausgedehnt wird, um eine eventuelle Spaltbildung zwischen der an das Loch angrenzenden Oberfläche des Auflagebleches und dem Schweißgut sicher zu vermeiden.

Es hat sich gezeigt, daß die erfindungsgemäße Verfahrenstechnik in allen Schweißpositionen beherrschbar ist, und zwar auch dann, wenn das Auflageblech nicht spaltfrei auf dem Trägerkörper aufliegt, d.h. unter den Bedingungen praktischer Baustelle.

Gemäß Anspruch 2 ist vorgesehen, daß das Herstellen der ersten und zweiten Auftragsschweißung nach dem Metall -Inert - Gas (MIG) Schweißverfahren mit Drahtelektrode erfolgt, wobei die erste Lage mit Sprühlichtbogen und die zweite Lage mit Impulslichtbogen geschweißt wird.

Eine bevorzugte Ausführungsform der Erfindung ist in Anspruch 3 niedergelegt. Dieser sieht vor, daß die nach einem kurzen Intervall der ersten Auftragsschweißung folgende zweite Auftragsschweißung auf die noch warme erste Schweißlage aufgebracht wird.

Die beiden Auftragsschweißungen werden also bevorzugt so kurz hintereinander, also gleichsam in einem Arbeitsgang ausgeführt, daß die erste Auftragsschweißung gerade hinreichend abkühlen kann. Ein Zeitintervall von 3 bis 6 Sekunden zwischen der ersten Auftragsschweißung und der zweiten Auftragsschweißung reicht hierfür häufig aus.

Das Verfahren läßt sich mit hoher Betriebssicherheit und gleichbleibender Qualität unter Einsatz moderner Techniken realisieren, vorzugsweise nach Anspruch 4 dadurch, daß mit dem Einleiten der ersten Auftragsschweißung von Hand ein vorgegebenes Computerprogramm die Steuerung der elektrischen schweißparameter und deren Dauer übernimmt und nach einem vorgegebenen Intervall die zweite Auftragsschweißung einleitet.

Das Computerprogramm kann einen einsatzort typischen mittleren Spalt zwischen Trägerkörper und Auflageblech berücksichtigen und so eine Mindesfüllung des Loches gewährleisten. Dies geschieht regelmäßig dadurch, daß eine Überhöhung vorgesehen wird, die durch den maximal auftretenden Spalt zwischen Auflageblech und Trägerkörper etwa kompensiert wird.

Es sei an dieser Stelle erwähnt, daß das Auslösen eines bestimmten Ablaufes beim schutzgasschweißen von Hand durch die DE PS 825730 an sich seit langem bekannt ist. Dort wird eine Zeituhr aktiviert, die nach dem Aufbau der Schutzgasatmophäre den Schweißstrom einschaltet.

Weiterhin sieht die Ausgestaltung nach Anspruch 5 vor, daß das Computerprogramm die zweite Auftragsschweißung durch eine kurze Nachlaufzeit sich mindernder Stromstärke beendet. So läßt sich ein nachteiliger zentraler Schweißkrater in der zweiten Schweißlage sicher verhindern.

Da, wie bereits erwähnt, die erste Auftragsschweißung Eisen aus dem Trägerwerkstoff aufnimmt, läßt sich das Verfahren, wie beispielsweise durch Meyer, "Das Schweißen von rostbeständigem Stahl" Schweißtechnische Mitteilungen Nr. 82 vom 10.10.1980 bekannt, dadurch ausüben, daß bei Trägerkörpern aus Stahl die zum Herstellen der ersten Auftragsschweißung verwendete Drahtelektrode gegenüber dem Werkstoff des hochkorrosionsbeständigen Auflagebleches überlegiert ist und einen geringeren Fe-Gehalt aufweist als dieser Werkstoff.

Bezüglich der in der Regel zum Einsatz kommenden üblichen Blechdicken sieht Anspruch 6 vor, daß bei einer Dicke des Auflagebleches von 1,5 bis 2,5 mm die Löcher einen Durchmesser von 5 bis 8 mm haben.

Bei ungewöhnlich dicken Auflageblechen, etwa bei Dicken über 2,5 mm, kann es zweckmäßig sein, entsprechend Anspruch 7 den Durchmesser der Löcher auf 6 bis 10 mm zu erhöhen und die zweite Auftragsschweißung durch eine dritte Auftragsschweißung abzudecken.

Nachfolgend wird die Erfindung anhand von Ausführungsbeispielen beschrieben, zu deren besseren Erläuterung die beigefügten Abbildungen dienen.

Die Figuren Fig. 1 bis Fig. 3 zeigen schematisch und im Ausschnitt ein auf einen Trägerkörper aufgelegtes Auflageblech in

Fig. 1      vor der ersten Auftragsschweißung,

Fig. 2      nach der ersten Auftragsschweißung,

Fig. 3      nach der zweiten Auftragsschweißung.

Weiterhin zeigt

Fig. 4      die Kopie eines Schliffbildes,

Fig. 5      einen Ausschnitt aus einem zylindrischen Behälter,

Fig. 6      den Ausschnitt A aus Fig. 5,

Fig. 7      den Ausschnitt B aus Fig. 5,

Fig. 8      den Ausschnitt C aus Fig. 5.

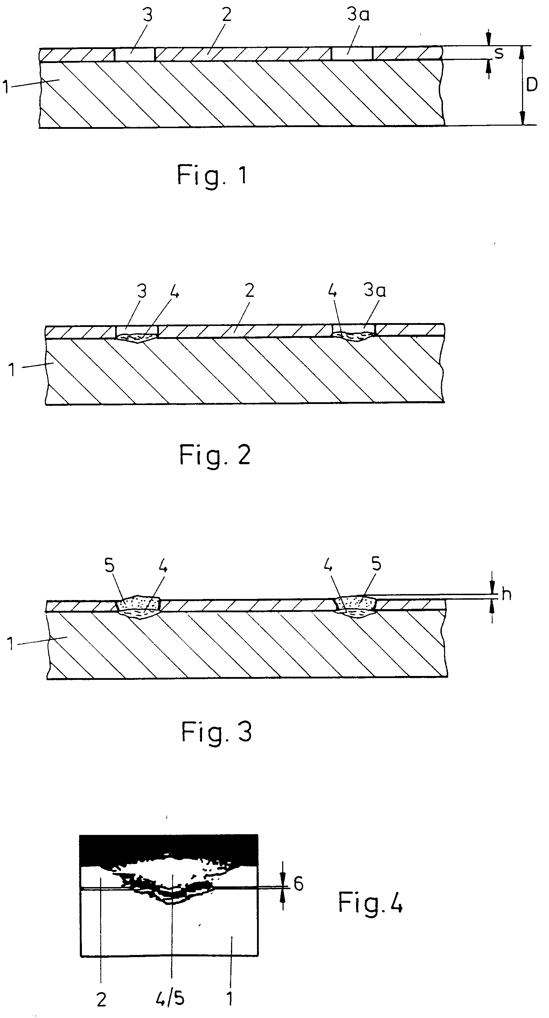

Bei der Darstellung des Verfahrensschemas durch Fig. 1 bis Fig. 3 liegt auf einem Trägerkörper 1 ein Auflageblech 2 flächig auf. Das Auflageblech 2 ist mit Löchern 3, 3a mit 7 mm Durchmesser versehen. Das Auflageblech 2 hat, wie aus Fig. 1 ersichtlich, eine Dicke s von 1,6 mm. Die Gesamtdicke D des plattierten Trägerkörpers ist 9,6 mm. In Fig. 2 ist eine erste Schweißlage 4 ausgeführt, in Fig. 3 eine zweite Schweißlage 5 zur Abdeckung der ersten Schweißlage 4 vorgesehen.

Fig.3 zeigt auch die Überhöhung h der zweiten Schweißlage 5, die bei dem Beispiel 1,5 mm beträgt.

Die Kopie eines Schliffbildes in Fig. 4 zeigt zwischen dem Trägerkörper 1 und dem Auflageblech 2 einen Luftspalt 6, mit einer Spaltweite h von etwa 1,5 mm. Recht deutlich ist auch zu sehen, wie sich die erste Schweißlage im zentralen Bereich fest im Trägerkörper verankert hat. Diese erste Schweißlage weist in der Mitte einen hier unschädlichen Krater auf, der bei der abdeckenden zweiten Schweißlage durch das allmähliche Vermindern der Schweißstromstärke am Ende der zweiten Auftragsschweißung nicht nur vermieden, sondern in eine leichte Erhöhung des Mittelbereichs der zweiten Schweißlage umgesetzt wurde. Die in Fig. 4 eingetragenen Werkstoffangaben weisen aus, daß der Trägerkörper aus gewöhnlichem Stahl R ST 37.2, das Auflageblech aus des hochlegiertem Nickel-Basis-Legierung der Werkstoffnummer 2.4819 und der Bezeichnung NICROFER 5716 h MoW besteht und mit einem Draht der Werkstoffnummer 2.4886 geschweißt wurde.

Mit überlegiertem Schweißzusatzwerkstoff zu schweißen reduziert die Wirkung der Fe-Aufnahme durch die erste Auftragsschweißung. Es lassen sich die Auftragsschweißungen generell mit dem Auflageblech-Werkstoff gleichen, artähnlichen und überlegiertem Schweißdraht durchführen.

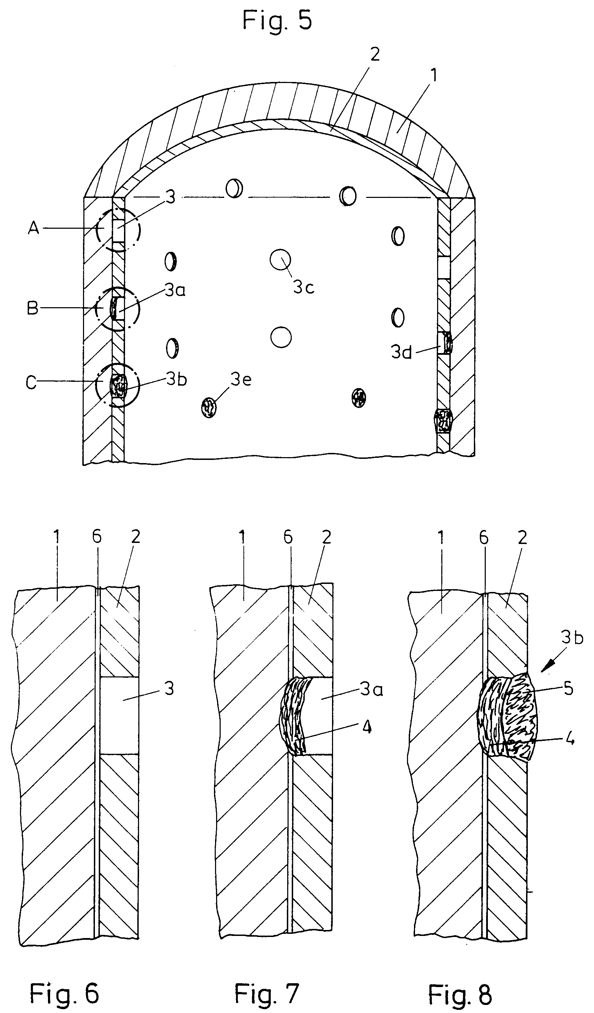

Fig. 5 zeigt einen Ausschnitt aus einem in der Auskleidung befindlichen zylindrischen Behälter, wobei einige Löcher des Auflagebleches 2, z.B. die Löcher 3 und 3c noch frei, die Löcher 3a und 3d gerade die erste Auftragsschweißung hinter sich haben und die Löcher 3b und 3e bereits abgedeckt sind.

Die Figuren Fig. 6 bis Fig. 8 sind vergrößerte Ausschnitte A, B und C aus Fig. 5, wobei nun auch der Luftspalt 6 sichtbar ist.

4

Mit einiger Fertigkeit und einem entsprechend gestalteten Computerprogramm läßt es sich auch in der hier gezeigten vertikalen Lage (Schweißposition s) vermeiden, daß bei der zweiten Auftragsschweißung unter der Schwerkraft der aufgeschmolzene Werkstoff eine Nase bildet.

Nachfolgend werden noch erprobte Parameter für Ausführungsbeispiele in den Schweißpositionen w (waagerecht) und s wiedergegeben.

Die angegebenen Parameter gelten für alle Schweißpositionen.

| Schweißdaten / Parameter | 1. + 2. Lage |
|---|---|
| Stromart/Polung | = ( + ) |
| Drahtelektroden 0 | 1,0 - 1,2 mm |
| Schutzgas | Argon 99,996 |
| Schweißstrom | 190 - 210 A |
| Schweißspannung | 26 - 29 V |
| Pulsfrequenz | ca. 240 Hz |
| Pulszeit | ca. 2 ms |
| Grundzeit | ca. 2,1 ms |
| Pulsspannung | ca. 35 V |
| Schweißzeit | ca. 1,25 sec. |
| Drahtvorschub | 6 - 8 m/min |

Eine weitere Ausgestaltung der Erfindung besteht darin, daß die Metall-Inert-Gas (MIG) Schweißung in der ersten Lage mit Hilfe eines Sprühlichtbogens ausgeführt wird. Damit wird ein tieferer Einbrand in den Trägerwerkstoff und dementsprechend eine bessere schweißtechnische Befestigung von Auskleidung und Trägerwerkstoff erreicht. Die zweite Lage wird sodann mit Hilfe des Impulslichtbogens geschweißt, um in der Decklage die angestrebte geringe Eisenaufmischung zu er-reichen. Beispielhafte Parameter sind hierfür wie folgt:

| Schweißdaten / Parameter | 1. Lage | 2. Lage |
|---|---|---|
| Stromart/Polung | = ( + ) | = ( + ) |
| Drahtelektroden 0 | 1,0 - 1,2 mm | 1,0 - 1,2 mm |
| Schutzgas | Argon 99,996 | Argon 99,996 |
| Schweißstrom | 160 - 180 A | 190 - 210 A |
| Schweißspannung | 22 - 26 V | 22 - 29 V |
| Pulsfrequenz | | ca. 240 Hz |
| Pulszeit | | ca. 2 ms |
| Grundzeit | | ca. 2,1 ms |
| Pulsspannung | | ca. 35 V |
| Schweißzeit | ca. 1 sec. | ca. 1,25 sec. |
| Drahtvorschub | 6 - 8 m/min. | 6 - 8 m/min. |

## Patentansprüche

**1.** Verfahren zum punktuellen Befestigen eines hochkorrosionsbeständigen Auflagebleches geringerer Dicke auf der Oberfläche eines weniger korrosionsbeständigen metallischen Trägerkörpers größerer Wanddicke, wobei das Auflageblech mit mehreren, auf seine Fläche verteilten Löchern versehen, danach auf den Trägerkörper aufgelegt und unter Schutzgas in den Löchern mit dem Trägerkörper unter Zusatz hochkorrosionsbeständigen Schweißzusatzwerkstoffes verschweißt wird, wobei die im Loch freiliegende Oberfläche des Trägerkörpers mit einer Auftragsschweißung versehen wird und dabei am Lochrand das Verschweißen des Auflagebleches mit dem Trägerkörper erfolgt, **dadurch gekennzeichnet,**

daß die Auftragsschweißung in zwei Abschnitten durchgeführt wird und in der ersten Auftragsschweißung eine erste, die im Loch freiliegende Oberfläche des Trägerkörpers vollständig abdeckende qqSchweißlage mit geringerer Dicke als die Dicke des Auflagebleches erzeugt und die Verschweißung des Auflagebleches mit dem Trägerkörper vorgenommen wird, worauf nach dem Erstarren der ersten Schweißlage mit einer zweiten Auftragsschweißung die erste Auftragsschweißung abgedeckt wird und daß die Schutzgasatmosphäre der ersten Auftragsschweißung über die Erstarrungsphase der ersten Schweißlage bis zum Ende der zweiten Auftragsschweißung durchgehend aufrechterhalten wird.

2.   Verfahren nach Anspruch 1,
**dadurch gekennzeichnet,**

daß das Herstellen der ersten und zweiten Auftragsschweißung nach dem Metall -Inert - Gas (MIG) Schweißverfahren mit Drahtelektrode erfolgt, wobei die erste Lage mit Sprühlichtbogen und die zweite Lage mit Impulslichtbogen geschweißt wird.

3.   Verfahren nach einem der Ansprüche 1 bis 2,
**dadurch gekennzeichnet,**
daß die nach einem kurzen Intervall der ersten Auftragsschweißung folgende zweite Auftragsschweißung auf die noch warme erste Schweißlage aufgebracht wird.

4.   Verfahren nach Anspruch 3,
**dadurch gekennzeichnet,**
daß mit dem Einleiten der ersten Auftragsschweißung von Hand ein vorgegebenes Computerprogramm die Steuerung der elektrischen Schweißparameter und deren Dauer übernimmt und nach einem vorgegebenen Intervall die zweite Auftragsschweißung einleitet.

5.   Verfahren nach Anspruch 4,
**dadurch gekennzeichnet,**
daß das Computerprogramm die zweite Auftragsschweißung durch eine kurze Nachlaufzeit sich mindernder Stromstärke beendet.

6.   Verfahren nach einem der Ansprüche 1 bis 5,
**dadurch gekennzeichnet,**
daß bei einer Dicke des Auflagebleches von 1,5 bis 2,5 mm die Löcher einen Durchmesser von 5 bis 8 mm haben.

7.   Verfahren nach einem der Ansprüche 1 bis 5,
**dadurch gekennzeichnet,**
daß bei einer Dicke des Auflagebleches über 2,5 mm die Löcher einen Durchmesser von 6 bis 10 mm haben und die zweite Auftragsschweißung durch eine dritte Auftragsschweißung abgedeckt wird.

Fig. 1

Fig. 2

Fig. 3

Fig.4

## Fig. 5

## Fig. 6

## Fig. 7

## Fig. 8